# EUROPÄISCHE PATENTANMELDUNG

(11) **EP 1 658 928 A2**
(43) Veröffentlichungstag der Anmeldung: **24.05.2006**
(21) Anmeldenummer: 05025125.5
(22) Anmeldetag: 17.11.2005
(51) Int. Cl.: B23P 21/00

(54) **Vorrichtung und Verfahren zur Fertigung von Sektionen für Verkehrsmittel, insbesondere für Luftfahrzeuge**

(30) Priorität: 22.11.2004 DE 102004056287
(71) Anmelder: Airbus Deutschland GmbH, 21129 Hamburg (DE)
(72) Erfinder: Frauen, Holger, 21129 Hamburg (DE); Klemkow, Eike, 19063 Schwerin (DE); Gnauck, Tomas, 21629 Neu Wulmstorf (DE)
(74) Vertreter: Maiwald Patentanwalts GmbH

(57) **Zusammenfassung**

Die Erfindung betrifft eine Vorrichtung zur Fertigung von Sektionen 19-27 für Verkehrsmittel, insbesondere für Luftfahrzeuge, mit mehreren Einzelkomponenten 18 mit einer Vielzahl von Arbeitsstationen 1-6.
Erfindungsgemäß ist jede Arbeitsstation 1-6 im Wesentlichen zur Durchführung eines von mindestens drei Fertigungsschritten ausgebildet und in jeder Arbeitsstation 1-6 sind Sektionen 19-27 form- und/oder abmessungsunabhängig bearbeitbar.
Infolge dieser Ausgestaltung ist gewährleistet, dass in jeder Arbeitsstation 1-6 jeweils nur hochspezialisierte Fertigungsschritte, beispielsweise in Form von Fügen und Heften, Verbinden, Komplettieren oder Durchführung von Restarbeiten, vollzogen werden. Dies ermöglicht einen hohen Automatisierungsgrad, da die Sektionen 19-27 unmittelbar nach Beendigung eines Fertigungsschrittes in eine nachfolgende Arbeitsstation 1-6 zur Durchführung eines darauf aufbauenden Fertigungsschrittes verbracht werden. Darüber hinaus ist in den Arbeitsstationen 1 bis 6 eine weitgehend form- und/oder abmessungsunabhängige Bearbeitung der Sektionen 19-27 möglich.

Weiterhin betrifft die Erfindung ein Verfahren zur Fertigung von Sektionen 19-27 für Verkehrsmittel, insbesondere für Luftfahrzeuge, durch das Zusammenfügen mehrerer Einzelkomponenten 18 in einer Vielzahl von Arbeitsstationen 1-6.
Erfindungsgemäß wird in jeder Arbeitsstation 1-6 im Wesentlichen einer von mindestens drei Fertigungsschritten durchgeführt und in jeder Arbeitsstation 1 bis 6 werden Sektionen 19-27 form- und/oder abmessungsunabhängig bearbeitet.

## Beschreibung

Die Erfindung betrifft eine Vorrichtung zur Fertigung von Sektionen für Verkehrsmittel, insbesondere für Luftfahrzeuge, mit mehreren Einzelkomponenten mit einer Vielzahl von Arbeitsstationen.

Weiterhin betrifft die Erfindung ein Verfahren zur Fertigung von Sektionen für Verkehrsmittel, insbesondere für Luftfahrzeuge, durch das Zusammenfügen mehrerer Einzelkomponenten in einer Vielzahl von Arbeitsstationen.

Vorrichtungen und Verfahren zur Fertigung von Sektionen für Luftfahrzeuge sind im Rahmen der zunehmend Verbreitung findenden Sektionsbauweise hinlänglich bekannt.

Bei bekannten Vorrichtungen und Verfahren verbleibt eine Sektion bis zur nahezu vollständigen Fertigstellung in ein und demselben Bauplatztyp. Diese Verfahrensweise ist nur bei einer überwiegend manuellen Bearbeitung der Sektionen wirtschaftlich sinnvoll. Werden beispielsweise im Zuge eines hochautomatisierten Fertigungsprozesses Nietroboter zum Zusammenfügen von Einzelkomponenten, insbesondere von Rumpfschalen und Fußbodengerüsten, zu einer vollständigen Sektion eingesetzt, ist es ineffektiv, die komplett gefügte Sektion auch noch für Folgearbeiten in demselben Bauplatz zu belassen, weil die investitionsintensiven Anlagenteile über längere Zeiträume wegen der Durchführung der unter Umständen zeitintensiven Folgearbeiten nicht genutzt werden können.

Darüber hinaus können an bekannten Bauplätzen bislang nur Sektionen bearbeitet werden, die bestimmte, genau definierte Längen und/oder Querschnittsgeometrien aufweisen. So ist es beispielsweise mit den bekannten Vorrichtungen und Verfahren zurzeit nicht möglich, Sektionen für unterschiedliche Derivate des gleichen Flugzeugtyps oder Sektionen für völlig unterschiedliche Flugzeugtypen auf ein und demselben Bauplatz bzw. mit denselben Werkzeugen zu fertigen. Zur Montage von Sektionen für unterschiedliche Flugzeugtypen bzw. Derivate des gleichen Flugzeugtyps, zum Beispiel in Gestalt von Lang- und Kurzstreckenversionen, müssen bislang jeweils speziell hierauf ausgerichtete Bauplätze mit hierauf individuell abgestimmten Werkzeugen vorgehalten werden. Jeder Bauplatz muss individuell an die zu fertigende Sektion angepasst werden. Es ist mit den bekannten Vorrichtungen und Verfahren daher nicht möglich, Sektionen unterschiedlicher Flugzeugtypen bzw. verschiedener Derivate des gleichen Flugzeugtyps in einem Bauplatz zu fertigen.

Damit sind die vorbekannten Vorrichtungen und Verfahren nur eingeschränkt für die effektive Herstellung von Sektionen für Rümpfe von Luftfahrzeugen mittels neuer, hochautomatisierter Fertigungsprozesse geeignet.

Aufgabe der Erfindung ist es, eine Vorrichtung und ein Verfahren zu schaffen, die eine effektive Auslastung der Produktionsanlagen auch bei einer hochautomatisierten Fertigungsweise der Sektionen für Rumpfzellen von Flugzeugen gewährleisten. Darüber hinaus ist es Aufgabe der Erfindung, eine Vorrichtung und ein Verfahren bereitzustellen, die es erlauben Sektionen mit unterschiedlichen Abmessungen, insbesondere mit unterschiedlichen Längenabmessungen und/oder verschiedenen Querschnittsabmessungen bzw. Querschnittsgeometrien, auch bei einem hohen Automatisierungsgrad auf ein und derselben Produktionsanlage zu fertigen.

Diese Aufgabe wird durch eine Vorrichtung mit den Merkmalen des Patentanspruchs 1 gelöst.

Dadurch, dass jede Arbeitsstation im Wesentlichen zur Durchführung eines von mindestens drei Fertigungsschritten ausgebildet ist und in jeder Arbeitsstation Sektionen form- und/oder abmessungsunabhängig bearbeitbar sind,
ergibt sich eine hohe Auslastung jeder einzelnen Arbeitsstation auch bei Anwendung hochautomatisierter Fertigungsverfahren. Darüber hinaus ermöglicht die weitgehend abmessungsunabhängige Fertigung das Zusammenfügen von Sektionen für unterschiedliche Flugzeugtypen und Derivate des gleichen Flugzeugtyps, beispielsweise in der Form von Lang- und Kurzstreckenversionen, auf demselben Bauplatz, sodass weniger Produktionsmittel vorgehalten werden müssen.

Nach einer vorteilhaften Ausgestaltung der Vorrichtung sind in den Arbeitsstationen insbesondere Sektionen mit unterschiedlichen Längenabmessungen und/oder Querschnittsabmessungen bearbeitbar.
Hieraus resultiert eine große Flexibilität der Vorrichtung im Hinblick auf die Montage von unterschiedlichen Sektionen für verschiedene Flugzeugtypen und Derivate des gleichen Flugzeugtyps.

Eine weitere vorteilhafte Ausgestaltung der Vorrichtung sieht vor, dass die Arbeitsstationen zumindest teilweise Handhabungssysteme, insbesondere Roboter, automatische Positioniereinrichtungen und/oder manuelle Bearbeitungseinrichtungen aufweisen.
Hierdurch wird eine höhere Produktivität der gesamten Fertigungseinrichtung erzielt.

Nach Maßgabe einer weiteren vorteilhaften Ausführungsform der Vorrichtung ist mindestens eine Puffereinrichtung vorgesehen.
Die Puffereinrichtung ermöglicht den Ausgleich von Schwankungen im Produktionsfluss in den jeweiligen Arbeitsstationen.

Weitere vorteilhafte Ausgestaltungen der Vorrichtung sind in den nachfolgenden Unteransprüchen dargelegt.

Die Aufgabe wird darüber hinaus durch ein Verfahren mit den Merkmalen des Patentanspruchs 12 gelöst.

Dadurch, dass in jeder Arbeitsstation im Wesentlichen einer von mindestens drei Fertigungsschritten durchgeführt wird und in jeder Arbeitsstation Sektionen form- und/oder abmessungsunabhängig bearbeitet werden,
ergibt sich eine optimale Auslastung der einzelnen Arbeitsstationen, was insbesondere beim Einsatz von hochautomatisierten Fertigungsverfahren von Bedeutung ist. Darüber hinaus ermöglicht die weitgehend form- und/oder abmessungsunabhängige Fertigungsweise das Zusammenfügen von Sektionen für unterschiedliche Flugzeugtypen und Derivate desselben Flugzeugtyps, beispielsweise Lang- und Kurzstreckenversionen, sodass weniger Produktionsmittel vorgehalten werden müssen.

Nach einer weiteren vorteilhaften Ausgestaltung des erfindungsgemäßen Verfahrens werden in einem ersten Fertigungsschritt in mindestens einer eine Füge- und Hefteinrichtung aufweisenden Arbeitsstation die Einzelkomponenten zu Sektionen zusammengeführt und transportfähig geheftet, in einem zweiten Fertigungsschritt werden die Einzelkomponenten der so gebildeten Sektionen in mindestens einer eine Verbindungseinrichtung aufweisenden Arbeitsstation miteinander verbunden und in einem dritten Fertigungsschritt werden die Sektionen in mindestens einer eine Komplettierungseinrichtung aufweisenden Arbeitsstation zur Anpassung an individuelle Ausstattungsanforderungen komplettiert und/oder es werden Restarbeiten an den Sektionen durchgeführt.
Dieser erfindungsgemäße Verfahrensablauf, bei dem in jeder Arbeitsstation jeweils nur ein spezieller Fertigungsschritt vollzogen wird, ermöglicht eine hohe Auslastung der jeweiligen Arbeitsstation, was insbesondere bei einem hohen Automatisierungsgrad der jeweiligen Arbeitsstation von Bedeutung ist. Nach Abschluss des jeweiligen Fertigungsschrittes wird die Sektion aus der betreffenden Arbeitsstation ausgetaktet und in die nachfolgende Arbeitsstation eingetaktet.

Eine weitere Ausgestaltung des erfindungsgemäßen Verfahrens sieht vor, dass die Verweildauern der Sektionen in den Arbeitsstationen in Abhängigkeit vom Arbeitsaufwand, insbesondere in Abhängigkeit von den Längenabmessungen und/oder den Querschnittsabmessungen der Sektionen, variiert werden.
Hierdurch verbleibt jede Sektion nur solange in einer Arbeitsstation, bis die durchzuführenden Arbeitsschritte abgeschlossen sind. Sektionen mit größeren räumlichen Abmessungen verbleiben üblicherweise länger in einer Arbeitsstation als Sektionen mit kleineren räumlichen Abmessungen. Demzufolge durchlaufen die Sektionen die Arbeitsstationen nicht mehr mit festen Taktzeiten.

Nach Maßgabe einer weiteren Ausgestaltung des erfindungsgemäßen Verfahrens werden die Sektionen zwischen den Arbeitsstationen über mindestens eine Puffereinrichtung bewegt.
Mittels dieser Ausgestaltung ist ein Ausgleich von Produktionsschwankungen in den einzelnen Arbeitsstationen möglich, sodass keine Arbeitsstation auf die Fertigstellung einer Sektion in der vorangehenden Arbeitsstation warten muss.

Eine weitere Ausgestaltung des Verfahrens sieht vor, dass die Sektionen unter Umgehung mindestens einer Puffereinrichtung zwischen den Arbeitsstationen bewegt werden.
Hierdurch werden unnötige zeitliche Verzögerungen durch eine gegebenenfalls nicht erforderliche Zwischenspeicherung vermieden.

Gemäß einer weiteren vorteilhaften Ausgestaltung des erfindungsgemäßen Verfahrens werden die Sektionen zwischen den Arbeitsstationen und/oder zwischen den Arbeitsstationen und mindestens einer Puffereinrichtung durch mindestens eine Transporteinrichtung, insbesondere durch ein automatisch und/oder manuell geführtes Transportfahrzeug, transportiert.
Mittels dieser Ausgestaltung kann das Verfahren ohne menschlichen Eingriff vollautomatisch und/oder zumindest teilweise manuell gesteuert ablaufen.

Weitere vorteilhafte Ausgestaltungen des Verfahrens sind in den nachfolgenden Unteransprüchen dargetan.

In der Zeichnung zeigt:

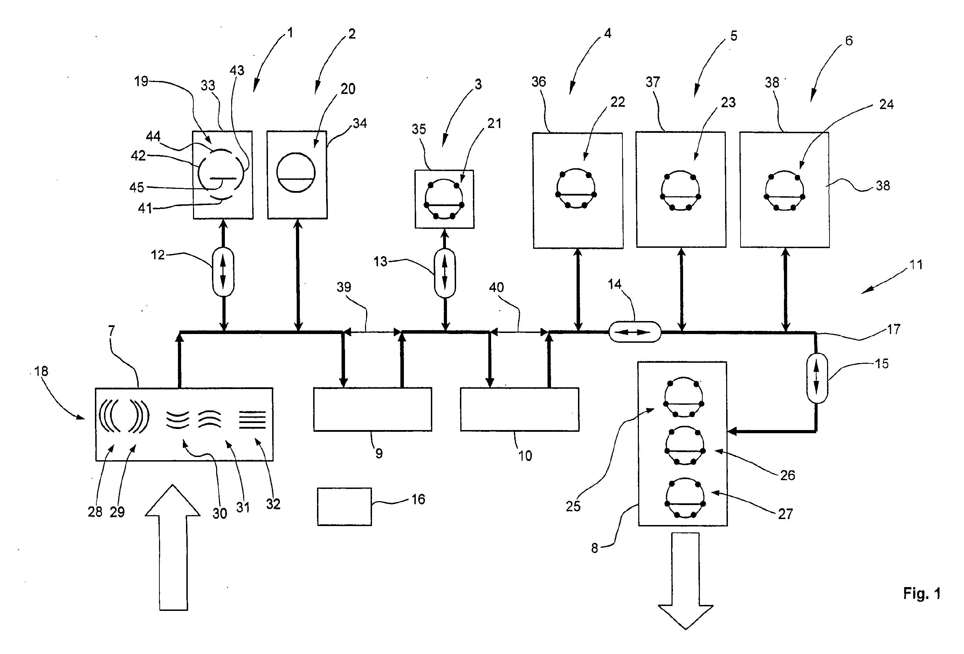

- **Fig. 1**: Eine Prinzipdarstellung der erfindungsgemäßen Vorrichtung zur form- und/oder abmessungsunabhängigen Fertigung von Sektionen für Luftfahrzeuge mit mehreren Einzelkomponenten.

Die **Fig. 1** zeigt ein Ausführungsbeispiel der erfindungsgemäßen Vorrichtung.

Die Vorrichtung umfasst unter anderem die Arbeitsstationen 1,2,3,4,5 und 6. Weiterhin weist die Vorrichtung einen Eingangsspeicher 7, einen Ausgangsspeicher 8 sowie die zwei Puffereinrichtungen 9 und 10 auf. Die Arbeitsstationen 1 bis 6 sowie der Eingangsspeicher 7, der Ausgangsspeicher 8 sowie die Puffereinrichtungen 9,10 sind durch eine Transporteinrichtung 11 miteinander verbunden. Die Transporteinrichtung 11 umfasst im gezeigten Ausführungsbeispiel unter anderem vier Transportfahrzeuge 12,13,14,15, die im Wesentlichen zum Transport der aufliegenden Sektionen dienen. Darüber hinaus sind weitere, in der Fig. 1 der Übersichtlichkeit halber nicht näher dargestellte Transportfahrzeuge vorgesehen, die sich beispielsweise mit aufliegenden Sektionen innerhalb der Arbeitsstationen 1 bis 6, den Puffereinrichtungen 9,10 oder dem Ausgangsspeicher 8 befinden.

Des Weiteren ist eine Steuer- und Regeleinrichtung 16 vorhanden, die zur Kontrolle sämtlicher vorstehend genannter Komponenten dient. Die Steuer- und Regeleinrichtung 16 kann beispielsweise eine komplexe elektronische Rechnereinheit, insbesondere ein Prozessrechner, sein.

Die Transportfahrzeuge 12,13,14,15 mit den gegebenenfalls darauf befindlichen Sektionen bewegen sich auf einer Führungseinrichtung 17, die beispielsweise in der Form eines Schienensystems ausgebildet ist. Die Führungseinrichtung 17 kann auch berührungslose Führungsmittel, zum Beispiel Induktionsschleifen oder laserbasierte Steuerungsmittel aufweisen. Die Transportfahrzeuge 12,13,14,15 können sich auf der Führungseinrichtung 17 in Richtung der schwarzen Doppelpfeile bewegen. Alternativ ist es auch möglich, die Bewegung der Transportfahrzeuge 12,13,14,15 ohne eine mechanische Führungseinrichtung 17, beispielsweise durch ein GPS-System oder dergleichen, zu steuern. Die Transportfahrzeuge 12,13,14,15 können beispielsweise Räder, Rollen, Walzen, Ketten, Schienenräder oder dergleichen zur Fortbewegung aufweisen und sind vorzugsweise als Unterflurfahrzeuge ausgebildet. Alternativ kann die Bewegung der Transportfahrzeuge 12,13,14,15 auf dem Untergrund auch berührungslos, beispielsweise durch Luftkissen, Magnetfelder oder dergleichen erfolgen. Die Führungseinrichtung 17 weist darüber hinaus eine Vielzahl von in der Darstellung der Fig. 1 nicht näher bezeichneten Abzweigungen auf, über die die Transportfahrzeuge 12,13,14,15 zwischen den Arbeitsstationen 1 bis 6, den Puffereinrichtungen 9,10, dem Eingangsspeicher 7 sowie dem Ausgangsspeicher 8 von der Steuer- und Regeleinrichtung bewegt werden können.

Im Eingangsspeicher 7 werden eine Vielzahl von Einzelkomponenten 18, die zur Bildung von Sektionen 19 bis 27 benötigt werden, zwischengelagert. Bei den Einzelkomponenten 18 handelt es sich beispielsweise um linke Seitenschalen 28, rechte Seitenschalen 29, Unterschalen 30, Oberschalen 31 sowie Fußbodengerüste 32. Die Bildung der Sektionen 19 bis 27 aus linken Seitenschalen 28, rechten Seitenschalen 29, Unterschalen 30, Oberschalen 31 und Fußbodengerüsten 32 wird auch als "Vierschalenbauweise" bezeichnet. Alternativ können mit der erfindungsgemäßen Vorrichtung bzw. dem erfindungsgemäßen Verfahren auch so genannte untere Halbschalen und obere Halbschalen zu fertigen Sektionen weiterverarbeitet werden. In diesem Fall sind die oberen bzw. die unteren Halbschalen bereits mit einem Fußbodengerüst versehen. Die Bauweise mit unteren und oberen Halbschalen wird auch als "Halbschalenbauweise" bezeichnet. Der Eingangsspeicher 7 muss dann zusätzlich auch eine entsprechende Zahl von unteren und oberen Halbschalen vorhalten. In jeder der Arbeitsstationen 1 bis 6 der erfindungsgemäßen Vorrichtung können sowohl Sektionen 19 bis 27 in der Vierschalenbauweise als auch in der Halbschalenbauweise gefertigt werden.

Die Arbeitsstationen 1 und 2 weisen jeweils eine Füge- und Hefteinrichtung 33,34 auf. In den Füge- und Hefteinrichtungen 33,34 werden die Einzelkomponenten 18 zu exemplarisch angeführten Sektionen 19,20 zusammengeführt. In der Arbeitsstation 1 ist als Beispiel eine Sektion 19 symbolisch dargestellt, deren Einzelkomponenten 18 gerade zusammengeführt werden. In der Arbeitsstation 2 ist exemplarisch eine Sektion 20 symbolisch eingezeichnet, die schon zusammengeführt bzw. zusammengefügt und geheftet wurde.

Die Einzelkomponenten 18 werden hierbei innerhalb der Füge- und Hefteinrichtungen 33,34 mittels nicht näher dargestellter automatischer Positioniereinrichtungen zueinander im Raum positioniert und dann mit minimalem Ausheftungsgrad, der aber einen Transport der teilgehefteten Station ohne ein Verziehen gerade noch zulässt, zusammen geheftet. Die Kontrolle der Positioniereinrichtungen erfolgt hierbei mittels der Steuer- und Regeleinrichtung 16.

Die Füge- und Hefteinrichtungen 33,34 weisen weiterhin jeweils mindestens eine in der Fig. 1 nicht näher dargestellte Hefteinrichtung auf, um die Einzelkomponenten 18 manuell und/oder automatisch zusammen zu heften. Die Heftung der Einzelkomponenten 18 kann beispielsweise durch Vernieten, Verkleben, Verschweißen, insbesondere durch Reib-Rührschweißen, Verklemmen, Verpressen oder dergleichen erfolgen. Unmittelbar nach Abschluss des Heftvorgangs verlassen die Sektionen 19,20 die Füge- und Heftstationen 33,34.

Die Sektionen 19,20 verbleiben auch nach Abschluss des Füge- und Heftvorgangs in den Arbeitsstationen 1,2 während des gesamten Herstellungsprozesses auf dem ihnen jeweils zugeordneten Transportfahrzeug, bei dem es sich beispielsweise um ein Transportfahrzeug 12 bis 15 handeln kann.

Eine Arbeitsstation 3 weist mindestens eine Verbindungseinrichtung 35 auf. In der Verbindungseinrichtung 35 befindet sich eine Sektion 21 im endgültig verbundenen Zustand. Die einzelnen Verbindungsstellen an der Sektion 21 sind hierbei durch kleine kreisförmige periphere Verdickungen symbolisiert, die der besseren Übersicht halber nicht näher bezeichnet wurden. In der Verbindungseinrichtung 35 werden die betreffenden Einzelkomponenten 18 der Sektion 21 mittels nicht näher dargestellter Verbindungsmittel endgültig und fest miteinander verbunden. Bei den Verbindungsmitteln handelt es sich beispielsweise um automatische Handhabungssysteme, insbesondere Knickarmroboter oder konventionelle, bahngeführte zumindest teilautomatische Handhabungssysteme. Die Verbindung der Einzelkomponenten 18 kann beispielsweise wiederum durch Vernieten, Verkleben, Verschweißen, insbesondere Reib-Rührschweißen, Verklemmen oder dergleichen erfolgen. Die Verweildauer einer Sektion in der Verbindungseinrichtung 35 wird so kurz wie möglich bemessen, um eine möglichst gute Auslastung zu erreichen.

Darüber hinaus umfassen die Arbeitsstationen 4,5,6 jeweils eine Komplettierungseinrichtung 36,37,38. In den Komplettierungseinrichtungen 36,37,38 werden zum einen kundenspezifische Anpassungen an den Sektionen 22,23,24 vorgenommen. Kundenspezifische Anpassungen betreffen beispielsweise die Einbringung von Befestigungsorganen für Sitze, Bordküchen, Sanitäreinrichtungen und dergleichen.

Zum anderen können in den Komplettierungseinrichtungen 36,37,38 Restarbeiten durchgeführt werden. Bei Restarbeiten handelt es sich beispielsweise um Arbeitsprozesse, die in den vorhergehenden Arbeitsstationen 1,2,3 nicht oder nicht vollständig abgeschlossen werden konnten.

Der Transport zwischen den Füge- und Hefteinrichtungen 33,34, der Verbindungseinrichtung 35, den Puffereinrichtungen 9,10 sowie den Komplettierungseinrichtungen 36,37,38 erfolgt beispielsweise mittels der Transportfahrzeuge 12 bis 15, die sich auf der Führungseinrichtung 17 kontrolliert von der Steuer- und Regeleinrichtung 16 bewegen. Grundsätzlich sollte die Anzahl der Transportfahrzeuge 12 bis 15 in etwa der Anzahl der Sektionen, die sich in der erfindungsgemäßen Vorrichtung befinden, entsprechen. Weitere Transportfahrzeuge sind erforderlich, wenn Sektionen in die Puffereinrichtungen 9,10 sowie in den Ausgangsspeicher 8 zum Abruf eingestellt werden sollen.

Um den konstruktiven Aufwand zur Realisierung der Vorrichtung zu vermindern, sind die Transportfahrzeuge 12 bis 15 bevorzugt zweigeteilt ausgeführt. Ein Transportfahrzeug 12 bis 15 weist in dieser Ausführungsvariante unter anderem ein auf der Führungseinrichtung 17 verfahrbares, hier nicht näher dargestelltes, Fahrgestell auf. Auf dem Fahrgestell ist ein im Bedarfsfall abnehmbares bzw. absetzbares, hier nicht näher dargestelltes, Positioniergestell zur Aufnahme einer Sektion während des Transportes und zum Abstellen bzw. zum Positionieren einer Sektion innerhalb einer Arbeitsstation 1 bis 6 angeordnet.
Während des Betriebs fährt ein aus einem Fahrgestell mit einem aufliegenden Positioniergestell gebildetes Transportfahrzeug mit einer vom Positioniergestell aufgenommenen Sektion in eine der Arbeitsstationen 1 bis 6 ein und setzt dort das Positioniergestell zusammen mit der aufliegenden Sektion ab. Vor der Bearbeitung erfolgt dann zunächst eine präzise Ausrichtung des Positioniergestells in Bezug auf die Arbeitsstation 1 bis 6 mittels nicht näher dargestellter Positionierorgane am Positioniergestell.
Das Fahrgestell kann nach dem Absetzen des Positioniergestells sofort wieder aus der Arbeitsstation herausfahren und ein weiteres Positioniergestell mit einer neuen Sektion zum Transport in oder aus einer anderen Arbeitsstation 1 bis 6 aufnehmen.

Die Trennung der eigentlichen Transportfunktion der Transportfahrzeuge 12 bis 15 von der Abstell- und Positionierfunktion des Positioniergestells hat den entscheidenden Vorteil, dass für jede Sektion jeweils nur ein, im Vergleich zum Transportfahrzeug konstruktiv weniger aufwändiges Positioniergestell erforderlich ist, sodass eine deutlich geringere Anzahl von Fahrgestellen, im Idealfall nur ein Fahrgestell, zum Betrieb der Vorrichtung erforderlich ist.

Weiterhin umfasst die erfindungsgemäße Vorrichtung in einer bevorzugten Ausführungsform zwei Puffereinrichtungen 9,10. Die Puffereinrichtungen 9,10 dienen zur kurzfristigen Aufnahme von Sektionen, falls eine der Arbeitsstationen 1 bis 6 noch nicht zur Aufnahme einer Sektion aus einem vorhergehenden Fertigungsschritt bereit.sein sollte. Dieser Fall kann beispielsweise dann eintreten, wenn in der Verbindungseinrichtung 35 die endgültige Verbindung einer Sektion länger als erwartet dauert. Im Normalfall werden die Puffereinrichtungen 9,10 durch Überbrückungen 39,40 übergangen.

Schließlich weist die Vorrichtung einen Ausgangsspeicher 8 zur Aufnahme mehrerer Sektionen 25,26,27 auf. Mittels des Ausgangsspeichers 8 lässt sich eine bestimmte Anzahl von Sektionen für nachfolgende Produktionsschritte auf Abruf bereithalten, sodass nachfolgende Produktionsstätten kurzzeitig noch weiter betrieben werden können, wenn es in der erfindungsgemäßen Vorrichtung auf Grund eines Fehlers zu einem Produktionsstillstand kommt.

Erfindungsgemäß erfolgt in den Füge- und Heftstationen 33,34 ausschließlich das Zusammenführen und Heften der Einzelkomponenten der Sektionen 19 bis 27, während in der Verbindungseinrichtung 35 allein die endgültige Verbindung der Einzelkomponenten der Sektionen 19 bis 27 erfolgt. Infolge des hohen Spezialisierungsgrades der einzelnen Arbeitsstationen 1 bis 6 ergibt sich insbesondere in Verbindung mit dem hohen Automatisierungsgrad in den Arbeitsstationen 1 bis 3 eine sehr hohe Produktivität der gesamten Vorrichtung.

In den drei Komplettierungseinrichtungen 36,37,38 erfolgt im Wesentlichen eine kundenspezifische Anpassung der Sektionen 19 bis 27, die noch überwiegend manuell durchgeführt wird und daher zeitintensiv ist. Darüber hinaus können in den Komplettierungseinrichtungen 36,37,38 noch etwaige Restarbeiten durchgeführt werden. Die Füge- und Hefteinrichtungen 33,34 sowie die Verbindungseinrichtung 35 weisen demgegenüber üblicherweise einen hohen Automatisierungsgrad auf, sodass die Verweildauern der Sektionen in diesen Arbeitsstationen 1 bis 3 gering ausfallen, um eine ausreichende Auslastung zu gewährleisten. Das zahlenmäßige Verhältnis zwischen den zwei Füge- und Hefteinrichtungen 33,34, der Verbindungseinrichtung 35 sowie den drei Komplettierungseinrichtungen 36,37,38 spiegelt diesen Umstand wieder. Infolge der erfindungsgemäßen Spezialisierung der Herstellungsschritte innerhalb der Arbeitsstationen 1 bis 6 wird überhaupt erst der Einsatz hochautomatisierter Fertigungsverfahren im Bereich der Sektionsfertigung für Flugzeuge eröffnet. Es sind aber auch andere zahlenmäßige Verhältnisse denkbar.

Erfindungsgemäß sind die Füge- und Hefteinrichtungen 33,34, die Verbindungseinrichtung 35 sowie die Komplettierungseinrichtungen 36,37,38 darüber hinaus derart ausgebildet, dass auch Sektionen mit unterschiedlichen Formen und/oder Abmessungen bearbeitbar sind. So lassen sich in den Arbeitsstationen 1 bis 6 beispielsweise sehr flexibel Sektionen für unterschiedliche Flugzeugtypen und Derivate gleicher Flugzeugtypen mit unterschiedlichen Querschnittsabmessungen und/oder Querschnittsgeometrien fertigen. Die Sektionen können hierbei beispielsweise maximale Querschnittsabmessungen in einem Bereich zwischen etwa 2 und 14 Metern bei stark variierenden Querschnittsgeometrien aufweisen. Die hohe Fertigungsflexibilität wird vor allem durch den Einsatz von automatischen Handhabungssystemen, insbesondere von Industrierobotern, Knickarmrobotern oder zumindest teilautomatischen, bahngeführten Handhabungssystemen, die eine große Variabilität hinsichtlich Sektionen mit unterschiedlichen Abmessungen und/oder geometrischen Formen erlauben, in Verbindung mit der erfindungsgemäßen Anordnung spezialisierter Arbeitsstationen erreicht.

Die Steuer- und Regeleinrichtung 16 dient zur Kontrolle und Steuerung sämtlicher Vorgänge innerhalb der erfindungsgemäßen Vorrichtung. Zu diesem Zweck ist die Steuer- und Regeleinrichtung mittels geeigneter, in der Fig. 1 nicht näher dargestellter Steuer- und Messleitungen mit dem Eingangsspeicher 7, dem Ausgangsspeicher 8, den Puffereinrichtungen 9,10, den Arbeitsstationen 1 bis 6, sowie den Transportfahrzeugen 12 bis 15, einschließlich der Transporteinrichtung 11, verbunden.

Nach Maßgabe des erfindungsgemäßen Verfahrens werden die zur Bildung einer Sektion erforderlichen Einzelkomponenten 18 zunächst dem Eingangsspeicher 7 entnommen und anschließend in eine der beiden Füge- und Hefteinrichtungen 33,34 verbracht. Eine direkte Zuführung der Einzelkomponenten 18 unter Umgehung der Eingangs- und Ausgangspeicher 7,8 ist gleichfalls möglich.

Der weitere Ablauf des erfindungsgemäßen Verfahrens soll exemplarisch am Beispiel der Sektion 19 dargestellt werden. Hierbei wird beispielsweise zunächst eine Unterschale 41 zur Bildung der Sektion 19 auf eines der Transportfahrzeuge 12 bis 15 aufgelegt, positioniert und in die Füge- und Hefteinrichtung 33 eingefahren. Das Transportfahrzeug 12 ist in der Darstellung der Fig. 1 im Bereich der Arbeitsstation 1 der Übersichtlichkeit halber nicht näher dargestellt. Ist das Transportfahrzeug 12 zweiteilig ausgebildet, so wird das Positioniergestell vom Fahrgestell abgesetzt und anschließend innerhalb der Füge- und Hefteinrichtung 33 exakt positioniert bzw. ausgerichtet. Alle weiteren, anzufügenden Einzelkomponenten 18 werden jeweils in Bezug zur Unterschale 41 ausgerichtet. Das Positioniergestell verbleibt mit der darauf befindlichen Unterschale 41 bis zum vollständigen Abschluss des Verfahrensschrittes in der Füge- und Hefteinrichtung 33, während das Fahrgestell wieder aus der Station herausfahren kann, um weitere Einzelkomponenten 18 oder andere Sektionen 19 bis 27 zu transportieren. Im weiteren Verfahrensablauf verbleibt die Sektion 19 ständig auf dem einmal zugeordneten Transportfahrzeug bzw. im Falle von zweigeteilten Transportfahrzeugen ständig auf dem einmal zugeordneten Positioniergestell.

Im Anschluss daran werden eine linke Seitenschale 42, eine rechte Seitenschale 43, eine Oberschale 44 sowie ein Fußbodengerüst 45 dem Eingangsspeicher 7 mittels nicht näher dargestellter Einrichtungen entnommen und anschließend in die Füge- und Hefteinrichtung 33 verbracht. In der Füge- und Hefteinrichtung 33 werden diese Einzelkomponenten dann mittels nicht näher dargestellter Einrichtungen exakt zueinander ausgerichtet und positioniert. Die Erfassung der jeweiligen Positionen der Einzelkomponenten erfolgt beispielsweise mittels einer nicht näher dargestellten Messeinrichtung, die mit der Steuer- und Regeleinrichtung 16 verbunden ist. Auf Grund der von der Messeinrichtung ermittelten Positionswerte kann die Steuer- und Regeleinrichtung 16 nicht näher dargestellte Positioniereinrichtungen zur Ausrichtung der Einzelkomponenten im Raum in Abhängigkeit von einem vorab gespeicherten Simulationsmodell entsprechend positionieren. Der gesamte Vorgang läuft im Wesentlichen vollautomatisch ab, wobei erforderlichenfalls auch per Hand eingegriffen werden kann. Im Anschluss daran werden die Unterschale 41, die linke Seitenschale 42, die rechte Seitenschale 43, die Oberschale 44 sowie das Fußbodengerüst 45 mittels ebenfalls nicht näher dargestellter Einrichtungen im Wesentlichen vollautomatisch zusammen geheftet. In diesem Zusammenhang können beispielsweise automatische Handhabungssysteme, insbesondere Knickarmroboter oder zumindest teilautomatische, bahngeführte Handhabungssysteme, die mit entsprechenden Werkzeugen bestückt sind, eingesetzt werden.

Das Zusammenheften kann mittels geeigneter Werkzeuge, beispielsweise durch Vernieten, Verkleben, Verschweißen, insbesondere Reib-Rührschweißen, Verklemmen, Verpressen oder dergleichen erfolgen. Erfindungsgemäß wird eine Sektion 19 jedoch nur soweit geheftet, dass ein Transport mittels des Transportfahrzeugs 12 ohne eine Deformation aufgrund des Eigengewichts der Sektion gerade noch möglich ist. Auf Grund dieses geringfügigen Ausheftungsgrades kann die Sektion 19 die Füge- und Hefteinrichtung 33 bereits nach kurzer Zeit wieder verlassen.

Danach gelangt die auf dem fest zugeordneten Transportfahrzeug 12 befindliche Sektion 19 in die Verbindungseinrichtung 35. In der Verbindungseinrichtung 35 erfolgt die endgültige und feste Verbindung der Einzelkomponenten zur Sektion 19. Zu diesem Zweck weist die Verbindungseinrichtung 35 nicht näher dargestellte automatische Handhabungssysteme, insbesondere Standard-Industrieroboter, Knickarmroboter oder automatische, bahngeführte Handhabungssysteme auf, die mit entsprechenden Werkzeugen bestückt sind. Die endgültige Verbindung der Einzelkomponenten der Sektion 19 erfolgt beispielsweise durch Vernieten, Verkleben, Verschweißen, insbesondere Reib-Rührschweißen, Verklemmen, Verpressen oder dergleichen. Auch der Vorgang der Verbindung der Einzelkomponenten der Sektion 19 erfolgt weitgehend vollautomatisch, gesteuert von der Steuer- und Regeleinrichtung 16. Auf Grund des hohen Automatisierungsgrades der Verbindungseinrichtung 35 kommt es in diesem Bereich auf eine besonders kurze Verweildauer der Sektionen an, um eine gute Auslastung der Verbindungseinrichtung 35 zu gewährleisten.

Mittels des Transportfahrzeugs 12 verlässt die endgültig und fest verbundene Sektion 19 die Verbindungseinrichtung 35 und wird in eine der drei Komplettierungseinrichtungen 36 bis 38 verbracht. Beispielsweise in der Komplettierungseinrichtung 36 erfolgt dann unter anderem eine kundenspezifische Anpassung der Sektion 19 und/oder die Erledigung von Restarbeiten. Auf Grund der großen Vielfalt der in diesem Bereich vorzunehmenden Arbeitsschritte ist der Automatisierungsgrad verhältnismäßig gering, sodass die meisten Arbeiten manuell durchgeführt werden. Demzufolge ist auch die Verweildauer einer Sektion in den Komplettierungseinrichtungen 36 bis 38 am höchsten, sodass in diesem Ausführungsbeispiel drei Komplettierungseinrichtungen 36,37,38 vorgesehen sind, um den Ausstoß an Sektionen aus den zwei Füge- und Hefteinrichtungen 33,34 bzw. der Verbindungseinrichtung 35 aufnehmen zu können.

Im Bedarfsfall können die Sektionen auch über die Puffereinrichtungen 9,10 geführt werden, sodass sie nicht direkt zur jeweils nachfolgenden Arbeitsstation 1 bis 6 gelangen. Dieser Fall kann beispielsweise eintreten, wenn eine der Arbeitsstationen 1 bis 6 noch nicht wieder zur Aufnahme einer Sektion bereit ist und keine zweite äquivalente Arbeitsstation 1 bis 6 zur Aufnahme einer Sektion frei ist.

Nach dem Durchlaufen einer der drei Komplettierungseinrichtungen 36 bis 38 gelangt die fertige Sektion 19 dann schließlich mittels des Transportfahrzeugs 12 in den Ausgangsspeicher 8 und von dort aus im Bedarfsfall an weitere Produktionsstätten.

Der vorstehend am Beispiel der Sektion 19 exemplarisch dargestellte Verfahrensablauf ist nur als ein Beispiel von vielen denkbaren Varianten anzusehen. So ermöglicht die Transporteinrichtung 11 in Verbindung mit den beispielhaft gezeigten Transportfahrzeugen 12 bis 15, den Puffereinrichtungen 9,10, dem Eingangsspeicher 7 und dem Ausgangsspeicher 8 eine Vielzahl von verschiedenen denkbaren Verfahrensabläufen, mit jeweils spezifischen Vor- und Nachteilen. Weiterhin kann die Anzahl der Arbeitsstationen 1 bis 6 bzw. die Anzahl der Füge- und Hefteinrichtungen 33,34, die Anzahl der Verbindungseinrichtung 35 sowie die Anzahl der Kompiettierungseinrichtungen 36 bis 38 entsprechend den Erfordernissen variiert werden.

Wie vorstehend bereits erwähnt wurde, können mit dem erfindungsgemäßen Verfahren bzw. mit der erfindungsgemäßen Vorrichtung Sektionen sowohl in der so genannten "Halbschalen-" als auch in der so genannten "Vierschalenbauweise" form- und/oder abmessungsunabhängig hergestellt werden.

### Bezugszeichenliste

- 1: Arbeitsstation
- 2: Arbeitsstation
- 3: Arbeitsstation
- 4: Arbeitsstation
- 5: Arbeitsstation
- 6: Arbeitsstation
- 7: Eingangsspeicher
- 8: Ausgangsspeicher
- 9: Puffereinrichtung
- 10: Puffereinrichtung
- 11: Transporteinrichtung
- 12: Transportfahrzeug
- 13: Transportfahrzeug
- 14: Transportfahrzeug
- 15: Transportfahrzeug
- 16: Steuer- und Regeleinrichtung
- 17: Führungseinrichtung
- 18: Einzelkomponenten
- 19: Sektion
- 20: Sektion
- 21: Sektion
- 22: Sektion
- 23: Sektion
- 24: Sektion
- 25: Sektion
- 26: Sektion
- 27: Sektion
- 28: linke Seitenschalen
- 29: rechte Seitenschalen
- 30: Unterschalen
- 31: Oberschalen

- 32: Fußbodengerüste
- 33: Füge- und Hefteinrichtung
- 34: Füge- und Hefteinrichtung
- 35: Verbindungseinrichtung
- 36: Komplettierungseinrichtung
- 37: Komplettierungseinrichtung
- 38: Komplettierungseinrichtung
- 39: Überbrückung
- 40: Überbrückung
- 41: Unterschale
- 42: linke Seitenschale
- 43: rechte Seitenschale
- 44: Oberschale
- 45: Fußbodengerüst

## Patentansprüche

1. Vorrichtung zur Fertigung von Sektionen (19-27) für Verkehrsmittel, insbesondere für Luftfahrzeuge, mit mehreren Einzelkomponenten (18) mit einer Vielzahl von Arbeitsstationen (1-6), **dadurch gekennzeichnet, dass** jede Arbeitsstation (1-6) im Wesentlichen zur Durchführung eines von mindestens drei Fertigungsschritten ausgebildet ist und in jeder Arbeitsstation (1-6) Sektionen (19-27) form- und/oder abmessungsunabhängig bearbeitbar sind.

2. Vorrichtung nach Anspruch 1, **dadurch gekennzeichnet, dass** in den Arbeitsstationen (1-6) insbesondere Sektionen (19-27) mit unterschiedlichen Längenabmessungen und/oder Querschnittsabmessungen bearbeitbar sind.

3. Vorrichtung nach Anspruch 1 oder 2, **dadurch gekennzeichnet, dass** die Arbeitsstationen (1-6) zumindest teilweise Handhabungssysteme, insbesondere Roboter, automatische Positioniereinrichtungen und/oder manuelle Bearbeitungseinrichtungen aufweisen.

4. Vorrichtung nach einem der Ansprüche 1 bis 3, **dadurch gekennzeichnet, dass** mindestens eine Puffereinrichtung (9,10) vorgesehen ist.

5. Vorrichtung nach einem der Ansprüche 1 bis 4, **dadurch gekennzeichnet, dass** der Transport der Sektionen zwischen den Arbeitsstationen sowie zwischen den Arbeitsstationen und der mindestens einen Puffereinrichtung durch mindestens eine Transporteinrichtung (11), insbesondere durch mindestens ein Transportfahrzeug (12-15) erfolgt.

6. Vorrichtung nach einem der Ansprüche 1 bis 5, **dadurch gekennzeichnet, dass** mindestens eine Arbeitsstation (1-6) eine Füge- und Hefteinrichtung (33,34) zum Zusammenfügen und Heften der Einzelkomponenten (18) der Sektionen (19-27) aufweist, um die Sektionen (19-27) mit geringstmöglichem Heftgrad transportabel zu machen.

7. Vorrichtung nach einem der Ansprüche 1 bis 6, **dadurch gekennzeichnet, dass** mindestens eine Arbeitsstation (1-6) eine Verbindungseinrichtung (35) zur Verbindung der Einzelkomponenten (18) zur Bildung einer Sektion (19-27) aufweist.

8. Vorrichtung nach einem der Ansprüche 1 bis 7, **dadurch gekennzeichnet, dass** mindestens eine Arbeitsstation (1-6) eine Komplettierungseinrichtung (36-38) zur Komplettierung der Sektionen (19-27), insbesondere zur Anpassung an individuelle Ausstattungsanforderungen, und/oder zur Durchführung von Restarbeiten an den Sektionen (19-27) aufweist.

9. Vorrichtung nach einem der Ansprüche 1 bis 8, **dadurch gekennzeichnet, dass** mindestens ein Eingangsspeicher (7) zur Aufnahme der Einzelkomponenten (18) und mindestens ein Ausgangsspeicher (8) zur Aufnahme fertiger Sektionen (19-27) vorgesehen ist.

10. Vorrichtung nach einem der Ansprüche 1 bis 9, **dadurch gekennzeichnet, dass** vorzugsweise zwei Füge- und Hefteinrichtungen (33,34), eine Verbindungseinrichtung (35), sowie drei Komplettierungseinrichtungen (36-38) vorgesehen sind.

11. Vorrichtung nach einem der Ansprüche 1 bis 10, **dadurch gekennzeichnet, dass** eine Steuer- und Regeleinrichtung (16) vorgesehen ist.

12. Verfahren zur Fertigung von Sektionen für Verkehrsmittel, insbesondere für Luftfahrzeuge, durch das Zusammenfügen mehrerer Einzelkomponenten (18) in einer Vielzahl von Arbeitsstationen (1-6), **dadurch gekennzeichnet, dass** in jeder Arbeitsstation (1-6) im Wesentlichen einer von mindestens drei Fertigungsschritten durchgeführt wird und in jeder Arbeitsstation (1-6) Sektionen (19-27) form- und/oder abmessungsunabhängig bearbeitet werden.

13. Verfahren nach Anspruch 12, **dadurch gekennzeichnet, dass** in einem ersten Fertigungsschritt in mindestens einer eine Füge- und Hefteinrichtung (33,34) aufweisenden Arbeitsstation (1-6) die Einzelkomponenten (18) zu Sektionen (19-27) zusammengeführt und transportfähig geheftet werden, in einem zweiten Fertigungsschritt die Einzelkomponenten (18) der so gebildeten Sektionen (19-27) in mindestens einer eine Verbindungseinrichtung (35) aufweisenden Arbeitsstation (1-6) miteinander verbunden werden und in einem dritten Fertigungsschritt die Sektionen (19-27) in mindestens einer eine Komplettierungseinrichtung (36-38) aufweisenden Arbeitsstation (1-6) zur Anpassung an individuelle Ausstattungsanforderungen komplettiert werden und/oder Restarbeiten an den Sektionen (19-27) durchgeführt werden.

14. Verfahren nach einem der Ansprüche 12 oder 13, **dadurch gekennzeichnet, dass** die Verweildauern der Sektionen (19-27) in den Arbeitsstationen (1-6) in Abhängigkeit vom Arbeitsaufwand, insbesondere in Abhängigkeit von den Längenabmessungen und/oder den Querschnittsabmessungen der Sektionen (19-27) variiert werden.

15. Verfahren nach einem der Ansprüche 12 bis 14, **dadurch gekennzeichnet, dass** die Sektionen (19-27) zwischen den Arbeitsstationen (1-6) über mindestens eine Puffereinrichtung (9,10) bewegt werden.

16. Verfahren nach einem der Ansprüche 12 bis 15, **dadurch gekennzeichnet, dass** die Sektionen (19-27) unter Umgehung mindestens einer Puffereinrichtung (9,10) zwischen den Arbeitsstationen bewegt werden.

17. Verfahren nach einem der Ansprüche 12 bis 16, **dadurch gekennzeichnet, dass** die Sektionen (19-27) zwischen den Arbeitsstationen (1-6) und/oder zwischen den Arbeitsstationen (1-6) und mindestens einer Puffereinrichtung (9,10) durch mindestens eine Transporteinrichtung (11), insbesondere durch ein automatisch und/oder manuell geführtes Transportfahrzeug (12-15), transportiert werden.

18. Verfahren nach einem der Ansprüche 12 bis 17, **dadurch gekennzeichnet, dass** in mindestens einer Füge- und Hefteinrichtung (33,34) die Einzelkomponenten (18) der Sektionen (19-27) im Wesentlichen mit Positioniereinrichtungen, insbesondere mit automatischen Handhabungssystemen und/oder mit Robotern, zusammengeführt und mit geringstmöglichem Aufwand geheftet werden, um die Verweildauer der Sektionen (19-27) in der mindestens einen Füge- und Hefteinrichtung (33,34) zu minimieren.

19. Verfahren nach einem der Ansprüche 12 bis 18, **dadurch gekennzeichnet, dass** in mindestens einer Verbindungseinrichtung (35) die Einzelkomponenten (18) der Sektionen (19-27) im Wesentlichen mit automatischen Handhabungssystemen, insbesondere mit Robotern, miteinander verbunden werden.

20. Verfahren nach einem der Ansprüche 12 bis 19, **dadurch gekennzeichnet, dass** in mindestens einer Komplettierungseinrichtung (36-38) die Sektionen (19-27) mit automatischen Handhabungssystemen, insbesondere mit Robotern, und/oder manuell komplettiert werden.

21. Verfahren nach einem der Ansprüche 12 bis 20, **dadurch gekennzeichnet, dass** die Einzelkomponenten (18) in mindestens einem Eingangsspeicher (7) und fertige Sektionen (19-27) in mindestens einem Ausgangsspeicher (8) aufgenommen werden.

22. Verfahren nach einem der Ansprüche 12 bis 21, **dadurch gekennzeichnet, dass** vorzugsweise zwei Füge- und Hefteinrichtungen (33,34), eine Verbindungseinrichtung (35) sowie drei Komplettierungseinrichtungen (36-38) vorgesehen werden.

23. Verfahren nach einem der Ansprüche 12 bis 22, **dadurch gekennzeichnet, dass** sämtliche Verfahrensabläufe mittels einer Steuer- und Regeleinrichtung (16) kontrolliert werden.
